# EUROPEAN PATENT APPLICATION

(11) **EP 4 661 272 A1**
(43) Date of publication of application: **10.12.2025**
(21) Application number: 23919873.2
(22) Date of filing: 01.11.2023
(51) Int. Cl.: H02M 3/28

(54) **POWER CONVERSION DEVICE**

(30) Priority: 31.01.2023 JP 2023013375
(71) Applicant: Hitachi, Ltd., Tokyo 100-8280 (JP)
(72) Inventor: HUSSAIN, Mohammed Mosaddique Nawaz, Tokyo 100-8280 (JP); FURUKAWA, Kimihisa, Tokyo 100-8280 (JP); MABUCHI, Yuichi, Tokyo 100-8280 (JP); KAMIZUMA, Hiroshi, Tokyo 100-8280 (JP)
(74) Representative: MERH-IP Matias Erny Reichl Hoffmann Patentanwälte PartG mbB
(86) International application number: PCT/JP2023/039378
(87) International publication number: WO 2024/161738

(57) **Abstract**

Provided is a power conversion device that: has a magnetic link that can reduce overall volume and cost; and strengthens coupling at the magnetic link. According to the present invention, a power conversion device that comprises an AC-DC bidirectional converter cell that performs a two-stage power conversion from AC to DC and DC to DC at each of three phases is characterized in that one power converter of the AC-DC bidirectional converter cell converts AC to DC, two power converters of the AC-DC bidirectional converter cell that are insulated by a two-winding high-frequency insulating transistor convert DC to DC, and, at the DC-DC conversion stage of the two-stage power conversion, a coupling inductor that magnetically connects each of the three phases is connected in series between a first power converter of the AC-DC bidirectional converter cell and the two-winding high-frequency insulating transistor.

## Description

### Technical Field

The present invention relates to the configuration of a power converter. More specifically, the present invention relates to the configuration of a solid-state transformer (SST) with magnetic coupling through a coupled inductor.

### Background of Invention

As is known in the art, in power electronics there exists a class of circuits referred to as power converter circuits (or more simply "power converters"). Power converters convert electrical energy from one form to another form. For example, power converters convert between AC power and DC power, change the voltage or frequency of a signal or some combination of those.

As is also known, traditionally, power converters having high frequency transformer-based isolation structures are widely used.

As is also known, traditionally, power converters having coupled inductors are widely used. A coupled inductor is an inductor with two or more windings on the same core.

As is also known, high power AC-DC converters connected to the three-phase AC source use two stages to convert AC to DC (mostly low voltage) in each phase. The first stage is for the conversion of AC to DC (mostly high voltage) and the second stage is for the conversion of DC (mostly high voltage) to DC (mostly low voltage) with galvanic isolation through the high frequency transformer.

In between the two conversion stages, DC link capacitors are used to absorb the double grid-frequency ripple current in each phase.

The size of the DC link capacitors can be reduced by transferring the double grid-frequency ripple current from the DC link capacitors to a high frequency AC "magnetic link" created in each phase. Due to the symmetry of the three phases, the flux generated by the double grid-frequency ripple currents of each phase cancel out each other in the magnetic link.

As a background technique in this technical field, for example, there is a technique such as Patent Document 1. The patent document 1 relates to a structure of a magnetic link created by adding two-winding transformers in series between the power electronic converter and the high frequency isolation transformer in each leg of a DC-DC resonant converter, and magnetically coupling the two-winding transformers.

### Prior Art Document

### Patent Document

Patent Document 1: US 9819275 B2

### Summary of Invention

### Issue to Resolve

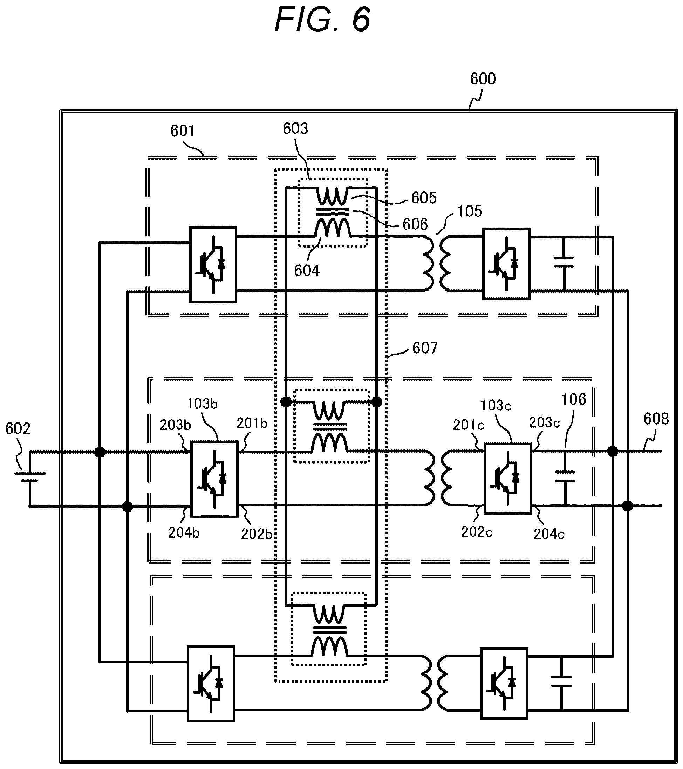

FIG. 6 shows a configuration of the prior art showing the magnetic link [607] connecting three converter cells [601] of a resonant DC-DC power electronic converter [600]. The magnetic link [607] is created through two-winding coupling transformers [603] placed between power electronic converters [103b] and the high frequency isolation transformers [105], corresponding to the Patent Document 1. The converter is fed from a DC power source [602] and has one DC output port [608].

The following issues exist with the magnetic link [607] created through the two-winding coupling transformer configuration in the resonant DC-DC power electronic converter [600].

The first issue is the increase in volume of the resonant DC-DC power electronic converter [600] because each two-winding coupling transformer [603] in the magnetic link [607] has one core [606] and two windings [604, 605]. Overall, for three numbers of two-winding coupling transformers [603] in the magnetic link [607], there are three cores [606] and six windings [604, 605], which significantly increases the volume of the resonant DC-DC power electronic converter [600].

The second issue is the increase in cost of the resonant DC-DC power electronic converter [600] which is directly related to the volume of the resonant DC-DC power electronic converter [600]. Overall, there is an additional cost of three cores [606] and six windings [604, 605] due to the magnetic link [607] of the resonant DC-DC power electronic converter [600].

The third issue is that the primary windings [604] of the three two-winding coupling transformers [603] of the magnetic link [607] are weakly coupled due to the leakage inductance between primary windings [604] and secondary windings [605] of each two-winding coupling transformers [603].

Therefore, an objective of the present invention is to provide a power converter having a magnetic link that can lower the overall volume and cost while having strong coupling in the magnetic link.

### Solution to Problem

To solve the problems, the present invention provides a power converter comprising: an AC to DC bidirectional power converter cell with two stage-power conversion from AC to DC and DC to DC in each of three-phase, wherein one power electronic converter of the AC to DC bidirectional power converter cell converts AC to DC, and two power electronic converters isolated by a two-winding high frequency isolation transformer of the AC to DC bidirectional power converter cell converts DC to DC, wherein a coupled inductor is connected in a DC -DC conversion stage of the two-stage power conversion such that the coupled inductor is in series and in between a first power electronic converter and the two-winding high frequency isolation transformer of the AC to DC bidirectional power converter cell, wherein the coupled inductor connects each of three-phase magnetically.

### Advantageous Effect

According to the invention, it is possible to realize a power converter having a magnetic link that can lower the overall volume and cost while having strong coupling in the magnetic link.

Objects, configurations, and effects other than those described above will be clarified by the description of the following embodiments.

### Brief Description of Drawings

[FIG. 1] FIG. 1 is a diagram showing a schematic configuration of a power converter according to a first embodiment.
[FIG. 2] FIG. 2 is a diagram showing an example of one converter unit (comprising three converter cells) of the power electronic converter of FIG. 1.
[FIG. 3] FIG. 3 is a diagram showing an example of bidirectional power electronic converters 103a, 103b and 103c of FIG. 1.
[FIG. 4] FIG. 4 is a diagram showing an example of bidirectional power electronic converters 103a, 103b and 103c of FIG. 1.
[FIG. 5] FIG. 5 is a diagram showing a schematic configuration of a power converter according to a second embodiment.
[FIG. 6] FIG. 6 is a diagram showing a schematic configuration of a resonant DC-DC power converter with two-winding coupling transformers in the magnetic link as shown in the prior art document, i.e., the patent document 1.

### Description of Embodiments

Hereinafter, embodiments of the invention will be described with reference to the drawings. In the drawings, the same configurations are denoted by the same reference numerals, and a detailed description of repeated parts will be omitted.

### First Embodiment

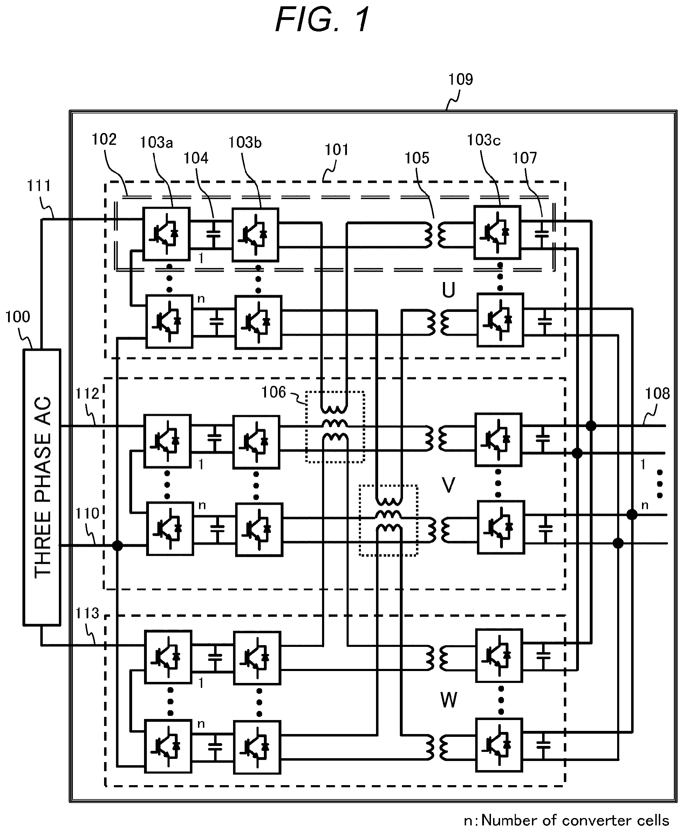

A power converter according to a first embodiment of the invention will be described with reference to FIG. 1 to FIG. 4.

FIG. 1 is a diagram showing a schematic configuration of a power electronic converter [109] with multiport DC outputs according to a first embodiment.

Power is supplied to the power electronic converter [109] from a three-phase (UVW) four-wire AC power source [100], and a plurality (n) of converter cells [102] in each phase convert AC power to DC power. Instead of a three-phase four-wire AC power source [100], a three-phase three-wire AC power source can also be used and in such a case, the fourth (neutral) wire [110] will not be present. The three phase wires are comprised of the U phase wire [111], V phase wire [112] and W phase wire [113].

Each converter cell [102] comprises an AC to DC bidirectional power electronic converter [103a] for converting a single-phase AC power into DC power, which is followed by a DC to AC bidirectional power electronic converter [103b] for converting DC power again into single phase high frequency AC power, and is finally followed by an AC to DC bidirectional power electronic converter [103c] for converting the high frequency AC power into DC power.

In each converter cell [102], the output terminals of the AC to DC bidirectional power electronic converter [103a] are connected to the input terminals of the DC to AC bidirectional power electronic converter [103b] through a DC link capacitor [104] which is placed in parallel between the two converters.

Each converter cell [102] has a two-winding high frequency isolation transformer [105] that galvanically isolates the DC to AC bidirectional power electronic converter [103b] and the AC to DC bidirectional power electronic converter [103c].

In each phase, the plurality (n) of the converter cells [102] are connected in series with each other at the input side. One ends [111, 112, 113] of the AC input terminals are connected to one phase of the three-phase four-wire AC power source [100] and the other end [110] is connected to the neutral point of the three-phase four-wire AC power source [100] through the neutral wire [110]. As described above, in a three-phase three-wire AC power source, the neutral wire [110] would not be present.

In each phase, 'n' number of converter cells [102] are collectively called as one 'phase cluster' [101]. Since there are three phases, there are three phase clusters [101].

In this embodiment, as shown in FIG. 1, the magnetic link [106] is established by a plurality (n) of coupled inductors [106] which are placed in series between a plurality (n) of DC-AC bidirectional power electronic converters [103b] and a plurality (n) of two-winding high frequency isolation transformers [105] in each converter cell [102].

Each coupled inductor [106] has three coils wound on a single core. Each coil of the coupled inductor [106] is from each converter cell [102], such that the three converter cells [102] corresponding to the three coils are from three different phase clusters [101].

Therefore, since there are 'n' number of converter cells [102] in each phase cluster [101], there are 'n' number of coupled inductors [106].

With this magnetic link [106] formed by the plurality of coupled inductors [106], three converter cells [102] from three phase clusters [101] are magnetically coupled.

The core of the coupled inductor [106] linking the three converter cells [102] is placed in one of the three converter cells [102], preferably in the middle converter cell [102] (for e.g., in V-phase).

Each DC output port [108] of the power electronic converter [109] is configured by combining the individual outputs of three converter cells [102] in parallel, wherein the three converter cells are from three phase clusters [101].

Therefore, since there are 'n' number of converter cells in each phase cluster [101], there are 'n' number of DC output ports [108]. Each DC output capacitor [107] is located at each pair of DC output ports [108] to smoothen the DC power.

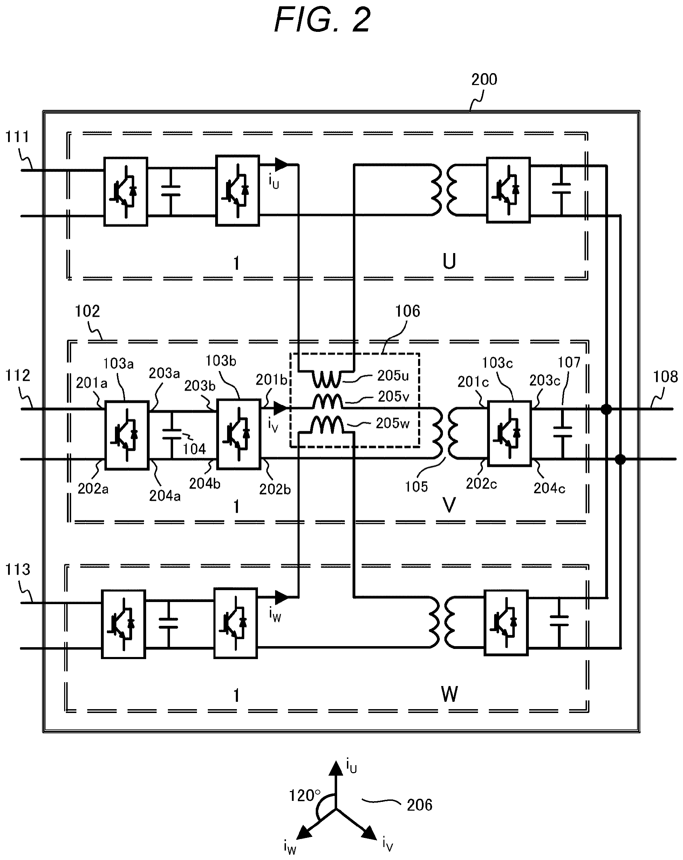

FIG. 2 is a diagram showing an example of one converter unit (comprising three converter cells) of the power electronic converter [109] of FIG. 1. In FIG. 2, the number of 'n' in each Phase cluster [101] is 'one' in each phase.

The DC output of three converter cells [102] are combined in parallel to form a DC output port [108]. These three converter cells [102] are from the three different phase clusters (corresponding to U, V and W), and these three converter cells [102] together form one converter unit [200], as shown in Fig. 2.

Generally, the number of converter units [200] is equal to the number of converter cells [102], i.e., 'n'. Furthermore, the number of DC output ports [108] are also equal to 'n' since each DC output port [108] is supplied by one converter unit [200].

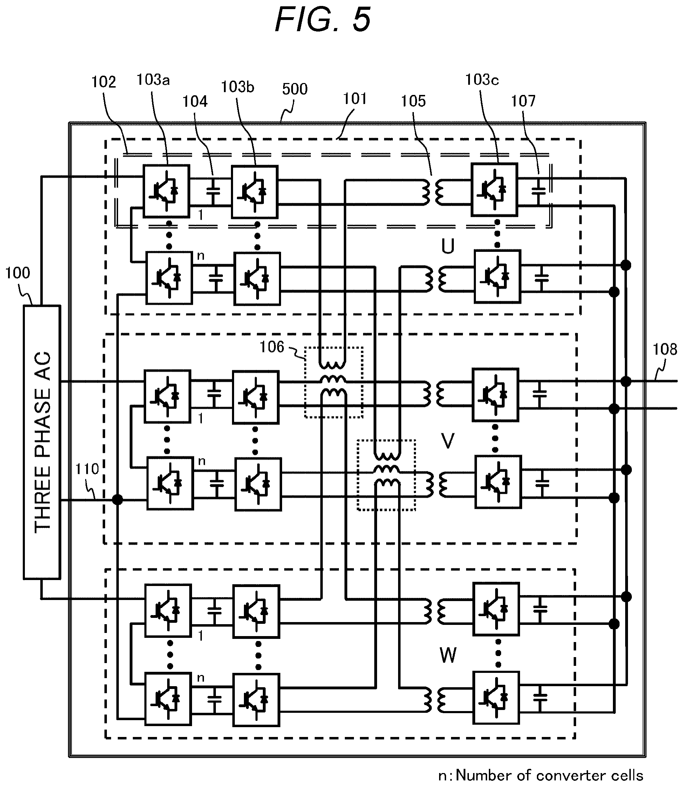

However, in some cases, one DC output port [108] may be connected to more than one converter unit [200]. In such cases, the number of DC output ports [108] are less than the number of converter units [200]. An example of this is shown in FIG. 5 and will be described below in the second embodiment.

Inside the converter cell [102], every bidirectional power electronic converter [103a, 103b, 103c] has a pair of AC ports [201a and 202a, 201b and 202b, 201c and 202c] at one end and a pair of DC ports [203a and 204a, 203b and 204b, 203c and 204c] at the other end. The bidirectional power electronic converters [103a, 103b, 103c] can operate as a bidirectional power converting circuit with power flow either from the pair of DC ports [203a and 204a, 203b and 204b, 203c and 204c] to the pair of AC ports [201a and 202a, 201b and 202b, 201c and 202c] or vice versa.

The coupled inductor [106] has three coils [205u, 205v, 205w] and the current [206] in these coils are denoted by *i_{U}, i_{V}* and *i_{W}* for the three phases, U, V and W respectively. These currents are 120° displaced in time and due to the symmetry of the three phases, the flux generated by *i_{U}, i_{V}* and *i_{W}* cancel out each other.

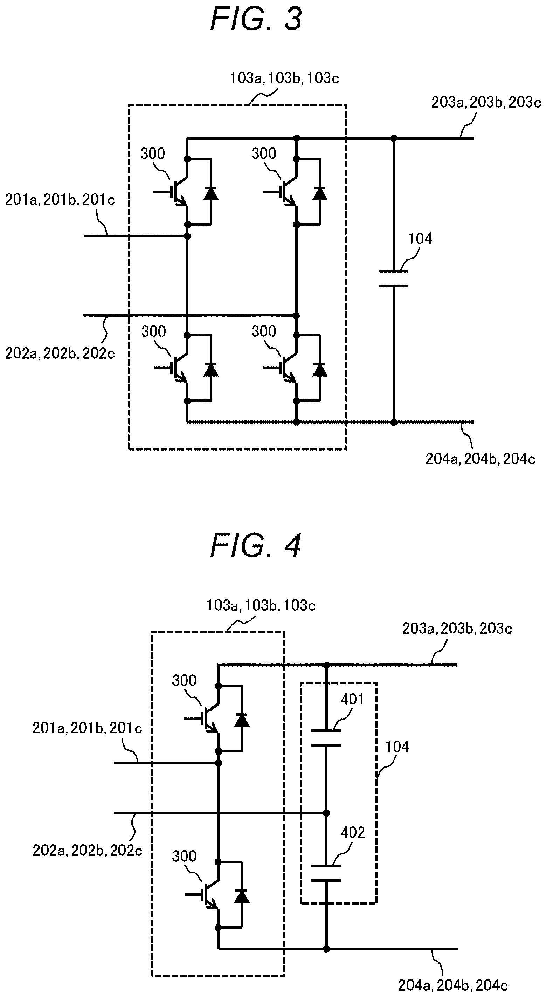

FIG. 3 is a diagram showing an example of bidirectional power electronic converters 103a, 103b and 103c of FIG. 1.

As shown in FIG. 3, a bidirectional power electronic converter [103a, 103b, 103c] includes a single-phase full-bridge circuit using a semiconductor device [300], for example, a MOSFET or IGBT etc. (in FIG. 3, an IGBT and a diode connected with each other in anti-parallel). The DC link capacitor [104] is connected in parallel to the single-phase full-bridge circuit [103a, 103b, 103c]. The connection points at the mid-point of each half-bridge form the AC ports [201a, 202a, 201b, 202b, 201c, 202c]. In the converter cell [102], the pair of AC ports [201a and 202a, 201b and 202b, 201c and 202c] is either connected to the three-phase four-wire AC power source [100] or to the two-winding high frequency isolation transformer [105].

The parallel connection points of the two half-bridge circuits form the DC ports [203a, 204a, 203b, 204b, 203c, 204c].

The bidirectional power electronic converters [103a, 103b, 103c] can operate as a bidirectional power converting circuit with power flow either from the pair of DC ports [203a and 204a, 203b and 204b, 203c and 204c] to the pair of AC ports [201a and 202a, 201b and 202b, 201c and 202c] or vice versa.

FIG. 4 is a diagram showing an example of bidirectional power electronic converters 103a, 103b and 103c of FIG. 1.

As shown in FIG. 4, a bidirectional power electronic converter [103a, 103b, 103c] has a parallel connection of a half-bridge circuit using a semiconductor device [300], for example, a MOSFET or IGBT etc. (in FIG. 4, an IGBT and a diode connected with each other in anti-parallel).

The half-bridge DC link capacitors [401, 402] are in series connection and together they are equivalent to the single DC link capacitor [104] of Figs. 1, 2 and 3.

The connection points at the mid-point of the half-bridge [103a, 103b, 103c] and the midpoint of the half-bridge DC link capacitors [401, 402] form the AC ports [201a, 202a, 201b, 202b, 201c, 202c]. In the converter cell [102], the pair of AC ports [201a and 202a, 201b and 202b, 201c and 202c] is either connected to the three-phase four-wire AC power source [100] or to the two-winding high frequency isolation transformer [105].

The parallel connection points of the half-bridge circuit and the half-bridge DC link capacitors [401, 402] form the DC ports [203a, 204a, 203b, 204b, 203c, 204c].

The bidirectional power electronic converters [103a, 103b, 103c] can operate as a bidirectional power converting circuit with power flow either from the pair of DC ports [203a and 204a, 203b and 204b, 203c and 204c] to the pair of AC ports [201a and 202a, 201b and 202b, 201c and 202c] or vice versa.

### Second Embodiment

A power converter according to a second embodiment of the invention will be described with reference to FIG. 5.

FIG. 5 is a diagram showing a schematic configuration of a power electronic converter [500] with single port DC output according to a second embodiment.

There is only one difference between the second embodiment (Fig. 5) and the first embodiment (Fig. 1). The difference is in the configuration style of the DC output port [108].

As shown in Fig. 5, the individual outputs of all the converter cells [102] are connected in parallel to form one single DC output port [108]. All the other configurations remain the same as the first embodiment (Fig. 1) and hence are not repeated.

FIG. 6 is a diagram showing a schematic configuration of a resonant DC-DC power electronic converter [600] with two-winding coupling transformers [603] in the magnetic link [607] as shown in the prior art document, i.e., the patent document 1.

In Fig. 6, the magnetic link [607] is created by magnetically coupled two-winding coupling transformers [603] placed between the DC to AC bidirectional power electronic converter [103b] and the two-winding high frequency isolation transformer [105] in each DC-DC converter cell [601].

The resonant DC-DC power electronic converter [600] is fed from a DC power source [602] and there is a single DC output port [608].

The volume and cost of the resonant DC-DC power electronic converter [600] is high because each two-winding coupling transformer [603] in the magnetic link [607] has one core [606] and two windings [604, 605]. Overall, for three numbers of two-winding coupling transformers [603] in the magnetic link [607], there are three cores [606] and six windings [604, 605]. Moreover, the magnetic coupling in the magnetic link [607] is weak as compared to a coupled inductor due to the leakage inductances between the primary windings [604] and secondary windings [605] of each two-winding coupling transformer [603].

According to the invention, the first advantageous effect is that it is possible to realize a power converter with a magnetic link that has lesser overall volume. This is because only one core and three coils are required to form the magnetic link among three cells as shown in FIG. 2, as compared to three cores and six windings required in the two-winding configuration such as FIG. 6.

The second advantageous effect is that it is possible to reduce the overall cost because only one core and three coils are required to form the magnetic link among three cells.

The third advantageous effect is that it is possible to create a strong magnetic coupling among the three coils of the coupled inductor because they are wound on the same core.

As a result, the reduction in DC link capacitor size can be achieved with minimal increase in overall volume and cost of the power converter.

The invention is not limited to the above-mentioned embodiments and includes various modifications. For example, the above-descried embodiments are described in detail for easy understanding of the invention, and the invention is not necessarily limited to those including all the configurations described above. Further, a part of the configuration of one embodiment can be replaced with the configuration of another embodiment, and the configuration of another embodiment can be added to the configuration of one embodiment. Further, another configuration may be added to a part of the configuration of each embodiment, and the part of the configuration may be deleted or replaced with another the configuration.

### Reference Sign List

100: Three-phase four-wire AC power source
101: Phase cluster comprising 'n' numbers of converter cells
102: Converter cell for two stage AC to DC conversion with high frequency transformer isolation
103a, 103b, 103c: AC to DC / DC to AC bidirectional power electronic converter
104: DC link capacitor
105: Two-winding high frequency isolation transformer
106: Magnetic link (Three-coil coupled inductor)
107: DC output capacitor
108: DC output port
109: Power electronic converter with multiport DC outputs
110: Neutral wire
111: AC input wire of U-phase
112: AC input wire of V-phase
113: AC input wire of W-phase
200: Converter unit comprising three converter cells
201a, 202a, 201b, 202b, 201c, 202c: AC port
203a, 204a, 203b, 204b, 203c, 204c: DC port
205u, 205v, 205w: Coils of the coupled inductor
206: Three-phase 120° displaced coil currents
300: Semiconductor device
401, 402: Half-bridge DC link capacitors
500: Power electronic converter with single port DC output
600: Resonant DC-DC power electronic converter
601: Converter cell for single stage DC to DC conversion with high frequency transformer isolation
602: DC power source
603: Two-winding coupling transformer
604: Primary winding of the two-winding coupling transformer
605: Secondary winding of the two-winding coupling transformer
606: Core of the two-winding coupling transformer
607: Magnetic link
608: DC output port

## Claims

1. A power converter comprising:
an AC to DC bidirectional power converter cell with two stage-power conversion from AC to DC and DC to DC in each of three-phase,
wherein one power electronic converter of the AC to DC bidirectional power converter cell converts AC to DC, and two power electronic converters isolated by a two-winding high frequency isolation transformer of the AC to DC bidirectional power converter cell converts DC to DC,
wherein a coupled inductor is connected in a DC -DC conversion stage of the two-stage power conversion such that the coupled inductor is in series and in between a first power electronic converter and the two-winding high frequency isolation transformer of the AC to DC bidirectional power converter cell,
wherein the coupled inductor connects each of three-phase magnetically.

2. The power converter according to claim 1,
wherein the coupled inductor has three coils,
wherein each of the three coils is from three different converter cells of the power converter,
wherein each of the three converter cells is from three different phases of the power converter,

3. The power converter according to claim 2,
wherein the three converter cells that share the same coupled inductor are magnetically coupled.

4. The power converter according to claim 1,
wherein the power converter has a plurality of converter units for inputting AC power and outputting DC power,
wherein input power electronic converters of the plurality of the converter units are connected in series and fed by an AC power source,
wherein outputs of three power electronic converters of each of the converter units are connected in parallel to form a single DC output port,
wherein the outputs of the plurality of converter units form a plurality of DC output ports.

5. The power converter according to claim 4,
wherein the total number of the coupled inductors is equal to the total number of the converter units,
wherein the total number of the DC output ports is also equal to the total number of the converter units.

6. The power converter according to claim 1,
wherein the power converter has a plurality of converter units for inputting AC power and outputting DC power,
wherein input power electronic converters of the plurality of the converter units are connected in series and fed by an AC power source,
wherein outputs of the plurality of converter units are connected in parallel to form a single DC output port.

7. The power converter according to claim 6,
wherein the total number of the coupled inductors is equal to the total number of the converter units,
wherein the total number of the DC output ports is only one.
